# EUROPÄISCHE PATENTSCHRIFT

(11) **EP 2 412 521 B1**
(45) Veröffentlichungstag und Bekanntmachung des Hinweises auf die Patenterteilung: **21.08.2013**
(21) Anmeldenummer: 10171179.4
(22) Anmeldetag: 29.07.2010
(51) Int. Cl.: B32B 17/10, F24H 3/00, G02B 6/00, H05B 3/84, H05B 3/86

(54) **Beleuchteter Heizkörper**
Illuminated radiator
Corps de chauffage éclairé

(43) Veröffentlichungstag der Anmeldung: 01.02.2012
(73) Patentinhaber: Saint-Gobain Glass France, 92400 Courbevoie (FR)
(72) Erfinder: Müller, Marco, 52525 Waldfeucht (DE); Messere, Rino, 4577 Modave (BE); Schreiber, Walter, 52074 Aachen (DE); Gillissen, Manfred, 52134 Herzogenrath (DE)
(74) Vertreter: Lendvai, Tomas

(56) Entgegenhaltungen:
- EP-B1- 1 627 555
- GB-A- 2 361 990

## Beschreibung

Die Erfindung offenbart einen beleuchteten Heizkörper aus Glas, ein Verfahren zu dessen Herstellung und dessen Verwendung.

Heizkörper können aus vielen Materialien wie Metall oder Keramiken gefertigt werden. Im Zuge strenger werdender Auflagen zum Umweltschutz und somit auch zur Gebäudeisolierung werden auch Heizkörper mit einer geringeren Wärmeabgabe interessant. Vor allem in Niedrigenergie- und Passivhäusern muss nur bei Bedarf und für kürzere Zeiträume geheizt werden. Hierbei sind vor allem flexible Heizkonzepte interessant. Eine Möglichkeit hierzu sind elektrisch betriebene Glasheizkörper, welche ihre Strahlungswärme schnell und gut regulierbar abgeben können. Zudem lassen sich Glasheizkörper sehr gut in einen schon bestehenden und eingerichteten Wohnraum integrieren. Aufwendige Umbaumaßnahmen sind in der Regel nicht erforderlich. So können Glasheizkörper in der Nähe einfacher elektrischer Anschlüsse leicht im Raum platziert werden oder über entsprechende Haltevorrichtungen an den Wänden befestigt werden. Ein weiterer Vorteil von Glasheizkörpern liegt in der einfachen Reinigung und ihrem geringen Gewicht. So lässt sich der Glasheizkörper, beispielsweise in Abhängigkeit von der Jahreszeit leicht an verschiedenen Orten innerhalb des Hauses aufstellen.

Aufgrund ihrer Bauweise und der Empfindlichkeit des Werkstoffes Glas sind Glasheizkörper relativ empfindlich gegenüber unbeabsichtigter mechanischer Krafteinwirkung. Zudem können Glasheizkörper aufgrund ihrer Durchsichtigkeit leicht übersehen werden. Da sich das Aussehen eines Heizkörpers bei dem im häuslichen Bereich üblichen Temperaturen nicht ändert, ist zudem der Betriebszustand oder die aktuelle Temperatur von außen nur schwer ersichtlich.

DE 20 2007 016 389 U1 offenbart einen transparenten Einscheiben-Glasheizkörper. Über zwei an gegenüberliegenden Seiten angebrachte Einspeisbahnen wird eine ganz- oder teilflächige, elektrisch leitende Beschichtung mit Strom versorgt. Der transparente Einscheiben-Glasheizkörper umfasst bevorzugt vorgespanntes Einscheibensicherheitsglas.

EP 1 627 555 B1 offenbart einen Glasheizkörper. Das Verbund-Plattenelement umfasst mindestens zwei flächig miteinander verklebte starre Scheiben mit jeweils einer elektrisch leitfähigen Beschichtung. Eine der beiden Scheiben umfasst eine Aussparung im Anschlussbereich. Diese ist mit elektrischen Außenanschlüssen versehen, welche mit den beiden Beschichtungen mittels flacher Elektroden kontaktiert sind.

DE 102 59 110 B3 offenbart ein Plattenelement mit einer Schichtheizung. Auf einem starren Substrat ist eine elektrisch leitfähige, über zwei dicht aneinanderliegende Elektroden mit Strom versorgte Beschichtung aufgetragen. Die Beschichtung weist aktive, mit Strom versorgte Bereiche und passive Bereiche ohne Stromfluss auf. Die passiven Bereiche wirken einer lokalen Überhitzung, den sogenannten "Hot-Spots" entgegen.

DE 295 10 238 U1 offenbart ein Fenster mit im Randbereich angebrachten Lichteinstrahlmitteln oder Lichtleitern. Auf dem Fenster angebrachte Reflektoren, Lichtablenkmittel, ermöglichen ein Abstrahlen des ins Fenster eingekoppelten Lichts. Als mögliche Lichtquellen kommen Glühlampen, Leuchtstoffröhren oder LEDs in Frage.

DE 102 24 421 A1 offenbart eine Lichtwand mit Lampen, die hinter einem Computerarbeitsplatz angeordnet ist. Die Lichtwand besteht aus einer transparenten Glas- oder Kunststoffscheibe, die bevorzugt über LEDs beleuchtet wird. Die Helligkeit und die Farbanteile können über eine Steuerungseinheit geregelt werden. Die Steuerungseinheit kann direkt mit dem PC des Computerarbeitsplatzes verbunden sein und die Helligkeit des Arbeitsplatzes in Abhängigkeit von der Helligkeit des Monitors regeln.

GB 2 361 990 A offenbart einen transparenten beleuchteten Heizkörper mit einer LED-Leiste an der unteren Seitenkante und Leuchtfeldern auf den Scheibenflächen.

Die Erfindung hat die Aufgabe, einen Glasheizkörper bereitzustellen, dessen äußeres Erscheinungsbild durch eine geeignete Beleuchtung veränderbar ist und womit sich in Abhängigkeit von der Temperatur des Heizkörpers unterschiedliche Farben darstellen lassen.

Die Aufgabe der Erfindung wird durch einen beleuchteten Glasheizkörper gemäß Anspruch 1 gelöst. Bevorzugte Ausführungen gehen aus den Unteransprüchen hervor.

Ein erfindungsgemäßes Verfahren zur Herstellung eines beleuchteten Glasheizkörpers und dessen Verwendung gehen aus weiteren nebengeordneten Ansprüchen hervor. Bevorzugte Ausführungen gehen aus den Unteransprüchen hervor.

Der erfindungsgemäße beleuchtete Glasheizkörper umfasst mindestens eine Verbundglasscheibe aus einer ersten Scheibe, beheizbaren Zwischenschicht und einer zweiten Scheibe. Die erste und zweite Scheibe können gleich oder unterschiedlich dimensioniert und/oder gebogen sein. Die Scheiben enthalten bevorzugt Flachglas (Floatglas), Quarzglas, Borosilikatglas, Kalk-Natron-Glas und/oder Gemische davon. Die Scheiben sind bevorzugt vorgespannt oder teilvorgespannt. Die beheizbare Zwischenschicht umfasst mindestens eine elektrisch beheizbare Beschichtung und eine Zwischenfolie. Die beheizbare Beschichtung kann sowohl auf der ersten und/oder zweiten Scheibe oder der Zwischenfolie aufgebracht sein. Die beheizbare Beschichtung umfasst sowohl Einfach- als auch Mehrfachschichtsysteme. Im Randbereich, bevorzugt 1 cm bis 5 cm von der Außenkante, ist die Beschichtung durch eine Trennlinie unterbrochen oder entfernt. Diese hochohmigen Trennlinien oder beschichtungsfreien Bereiche werden nicht vom Strom durchflossen. Zwei Elektroden und Kabel versorgen die beheizbare Beschichtung, gegebenenfalls über einen Transformator, mit elektrischem Strom. Die Zwischenfolie umfasst bevorzugt PVB (Polyvinylbutyral), EVA (Polyethylvinylacetat), PC (Polycarbonat), PU (Polyurethan), PET (Polyethylenterephthalat), Polybutylenterephthalat (PBT) und/oder Gemische oder Copolymere davon. Über ein Verbindungsstück ist an mindestens einer Längskante der Verbundglasscheibe eine LED-Leiste angebracht. Die LED-Leiste ist bevorzugt an der unteren Längskante der Verbundglasscheibe angebracht, da hier die Temperatur des Heizkörpers häufig am geringsten ist. Das Verbindungsstück kann sowohl als Klebung, Klebeband oder Klemmen ausgebildet sein und ist im Bereich der Heizkörpertemperaturen temperaturbeständig. Die LED-Leiste umfasst mindestens eine LED, eine an der LED befestigte LED-Leiterplatte und eine an der LED-Leiterplatte befestigte elektrische Kontaktierung. Die LED-Leiterplatte umfasst handelsübliche Leiterplatten und/oder Platinen. Diese bestehen aus elektrisch isolierenden Materialien, auf denen elektrische Verbindungen angebracht sind. Beispiele für isolierende Materialien sind nicht leitfähige Polymere wie mit Epoxydharz getränkte Glasfaser, Teflon, Keramik und/oder Polyesterfolie. Die elektrischen Verbindungen, beispielsweise Leitungsdrähte, enthalten bevorzugt Kupfer, Eisen, Zinn, Nickel, Gold, Silber und/oder Legierungen davon. Die elektrische Kontaktierung, beispielsweise eine Lotverbindung und Kabel, stellt die Verbindung zur Stromquelle her. Eine Ummantelung umgibt die LED, LED-Leiterplatte und die elektrische Kontaktierung. Die Ummantelung kann als flexibles oder starres Gehäuse ausgebildet sein. Leuchtfelder sind auf der ersten Scheibe und/oder zweiten Scheibe angeordnet. Die Leuchtfelder reflektieren, emittieren oder streuen das von den LEDs in die Verbundglasscheibe eingekoppelte Licht nach außen. Sind nur einzelne Leuchtfelder auf der ersten Scheibe und/oder zweiten Scheibe angeordnet, so leuchtet die Verbundglasscheibe nur im Bereich der Leuchtfelder. Ist die gesamte Verbundglasscheibe mit Reflektoren versehen, so leuchtet entsprechend die gesamte Verbundglasscheibe.

Die Verbundglasscheibe umfasst einen Temperaturfühler. Die LED-Leiste und/oder die Verbundglasscheibe umfassen einen Regler oder eine Steuereinheit.

Der an der Verbundglasscheibe befestigte Temperaturfühler ermittelt die Temperatur der Verbundglasscheibe und gibt diese an die Steuereinheit weiter.

Die Steuervornchtung ermöglicht die gezielte Beleuchtung einzelner LEDs. Durch die Anordnung verschiedenfarbiger LEDs auf der LED-Leiterplatte lassen sich farbige Lichteffekte erzeugen. Damit lassen sich in Abhängigkeit von der Temperatur des Heizkörpers unterschiedliche Farben darstellen. Dies umfasst beispielsweise eine rote Farbe beim warmen Heizkörper oder ein Kaminfeuereffekt.

Der erfindungsgemäße Glasheizkörper kann über an der Verbundglasscheibe angebrachte Ständer oder Halterungen aufgestellt oder an der Wand aufgehängt werden. Die Ständer oder Halterungen enthalten bevorzugt Metall, Polymer und/oder Glas.

Die beheizbare Beschichtung ist bevorzugt an der ersten Scheibe und/oder zweiten Scheibe angebracht. Die beheizbare Beschichtung wird bevorzugt durch CVD (chemical vapor deposition / Chemische Gasphasenabscheidung), CLD (chemical liquid deposition / Chemische Flüssigphasenabscheidung), PVD (physical vapor deposition) und/oder Kombinationen davon auf der ersten Scheibe und/oder zweiten Scheibe aufgebracht. Die beheizbare Beschichtung wird besonders bevorzugt durch Sprühverfahren, Pyrolyseverfahren, Sputtering, Magnetronsputtering, Sol-Gel Verfahren, Ionenstrahlverfahren, Elektronenstrahlverfahren, Gasphasenabscheidung und/oder Kombinationen davon auf dem Glassubstrat aufgebracht.

Die beheizbare Beschichtung weist bevorzugt einen Schichtwiderstand von 1 O pro Quadrat bis 25 O pro Quadrat, bevorzugt 1 O pro Quadrat bis 8 O pro Quadrat, besonders bevorzugt 1 O pro Quadrat bis 4 O pro Quadrat auf.

Die Verbundglasscheibe umfasst bevorzugt eine Randversiegelung, bevorzugt aus PVB (Polyvinylbutyral), EVA (Polyethylvinylacetat), PC (Polycarbonat), PU (Polyurethan), PET (Polyethylenterephthalat), Epoxidharz (Polyepoxide), PVC (Polyvinylchlorid) und/oder Gemische oder Copolymere.

Das Verbindungsstück zwischen der Verbundglasscheibe und der LED-Leiste enthält bevorzugt, Acrylatklebstoffe, Methylmethacrylatklebstoffe, Cyanacrylatklebstoffe, Polyepoxide, Silikonklebstoffe und/oder Silanvernetzende-Polymerklebstoffe, bevorzugt MS-Polymere RTV (raumtemperaturvernetzenden)-Silikonkautschuk, HTV (hochtemperaturvemetzenden)-Silikonkautschuk, peroxidischvernetzenden-Silikonkautschuk, 2 Komponenten LSR (Liquid Silicone Rubber)-Silikonkautschuk und/oder additionsvernetzenden-Silikonkautschuk sowie Gemische und/oder Copolymere davon. Das Verbindungsstück umfasst bevorzugt ein doppelseitiges, optisch transparentes Klebeband.

Die LED-Leiste umfasst bevorzugt eine Ummantelung aus Metall und/oder Polymer bevorzugt Eisen, Aluminium, Titan, Chrom, Vanadium, Mangan oder Legierungen und/oder Polyolefine, Silikone, Polyisoprene, Styrol-Butadien-Kautschuk, Butadien-Acrylnitril-Kautschuk und/oder Polyacrylate sowie Gemische und/oder Copolymere.

Die Leuchtfelder umfassen bevorzugt Partikel, Punktraster, Strichraster, Aufkleber, Anlagerungen, Einkerbungen, Siebdrucke, Einritzungen und/oder Kombinationen davon auf der ersten Scheibe, zweiten Scheibe und/oder Zwischenfolie. Die Leuchtfelder können sowohl auf der Innenseite (Seite mit elektrisch beheizbarer Beschichtung) oder der Außenseite der Scheibe(n) angeordnet sein.

Die Erfindung umfasst des Weiteren ein Verfahren zur Herstellung eines beleuchteten Heizkörpers aus Glas. In einem ersten Schritt werden eine elektrisch beheizbare Beschichtung aus einer oder mehreren elektrisch leitfähigen Schichten sowie zwei Elektroden inklusive der notwendigen Verkabelung auf einer ersten Scheibe aufgebracht. Im Randbereich, bevorzugt 1 cm bis 5 cm von der Außenkante, wird die Beschichtung durch eine Trennlinie unterbrochen oder abgetragen. Im folgenden Schritt wird eine Zwischenfolie auf der elektrisch beheizbaren Beschichtung angeordnet. Die Anordnung aus der ersten Scheibe, der elektrisch beheizbaren Beschichtung, der zwei Elektroden und einer zweiten Scheibe wird zu einer Verbundglasscheibe laminiert. Die erste und zweite Scheibe können gleich oder unterschiedlich dimensioniert und/oder gebogen sein. Anschließend wird eine LED-Leiste an einer Außenkante der Verbundglasscheibe befestigt. Die LED-Leiste umfasst mindestens eine LED, eine an der LED befestigte LED-Leiterplatte und eine an der LED-Leiterplatte befestigte elektrische Kontaktierung. Die LED-Leiste wird anschließend in eine Ummantelung eingepasst. In einem abschließenden Schritt werden Ständer und/oder Halterungen an der Unterkante der Verbundglasscheibe befestigt.

Die erste Scheibe und/oder zweite Scheibe wird bevorzugt mit Leuchtfeldern (8) versehen. Die Leuchtfelder werden bevorzugt durch Druckverfahren wie beispielsweise Siebdruck auf den Scheiben oder der Zwischenfolie aufgetragen.

Die Erfindung umfasst des Weiteren die Verwendung des erfindungsgemäßen Heizkörpers als Heizung in Innenräumen oder als künstlichen Kamin.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
Figur 1 eine schematische Ansicht des erfindungsgemäßen beleuchteten Glasheizkörpers,
Figur 2 einen Querschnitt des erfindungsgemäßen, beleuchteten Glasheizkörpers und
Figur 3 einen weiteren schematischen Querschnitt der Verbundglasscheibe des beleuchteten Glasheizkörpers.

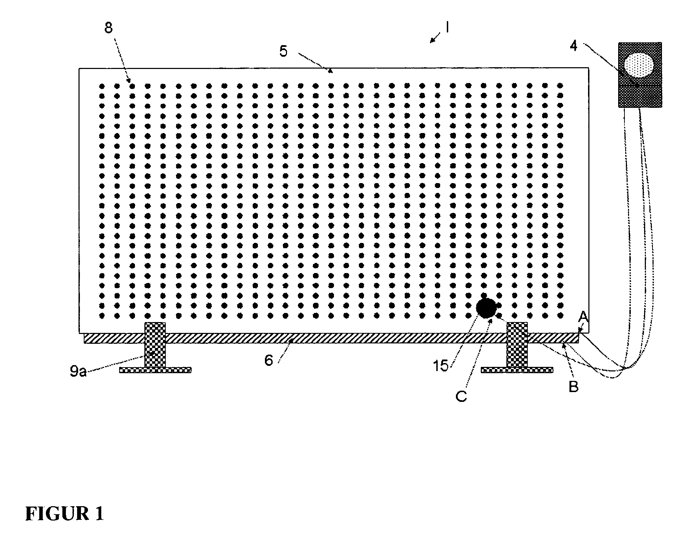

Figur 1 zeigt eine schematische Ansicht des erfindungsgemäßen beleuchteten Glasheizkörpers (I). An der unteren Kante der beheizbaren Verbundglasscheibe (5) befindet sich die LED-Leiste (6). Das über die LED-Leiste (6) in die Verbundglasscheibe (5) eingekoppelte Licht wird an den Leuchtfeldern (8) nach außen in den Raum reflektiert. Ein an der Verbundglasscheibe (5) befestigter Temperaturfühler (15) ermittelt die Temperatur der Verbundglasscheibe (5) und gibt diese über den Anschluss (C) an die Steuereinheit (4) weiter. In Abhängigkeit von der Ist-Temperatur kann über die Steuereinheit (4) über den Anschluss (B) die Temperatur der Verbundglasscheibe (5) nachreguliert werden. Die Steuereinheit (4) kann auch über den Anschluss (A) die Steuerung der LED-Leiste (6) übernehmen.

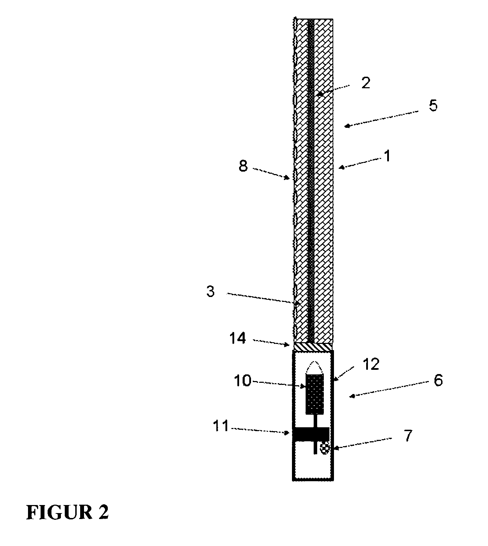

Figur 2 zeigt einen schematischen Querschnitt des erfindungsgemäßen, beleuchteten Glasheizkörpers (I). Die Verbundglasscheibe (5) umfasst eine erste Scheibe (1), beheizbare Zwischenschicht (2) und eine zweite Scheibe (3). Auf der zweiten Scheibe (3) sind Leuchtfelder (8) aufgebracht. Ein Verbindungsstück (14), beispielsweise eine Klebung oder ein optisch transparenter Klebestreifen, verbindet die LED-Leiste (6) mit der Verbundglasscheibe (5). Die LED-Leiste (6) umfasst mindestens eine LED (10), eine an der LED (10) befestigte LED-Leiterplatte (11), eine an der LED-Leiterplatte (11) befestigte elektrische Kontaktierung (7) und eine Ummantelung (12) der Komponenten. Es sind bevorzugt mehrere LEDs (10) auf der LED-Leiterplatte (11) befestigt. Die LEDs (10) umfassen bevorzugt rote, grüne und blaue Farben. Dies ermöglicht über die Leuchtfelder (8) die Darstellung von Farbübergängen oder Echtfarben auf der Verbundglasscheibe (5).

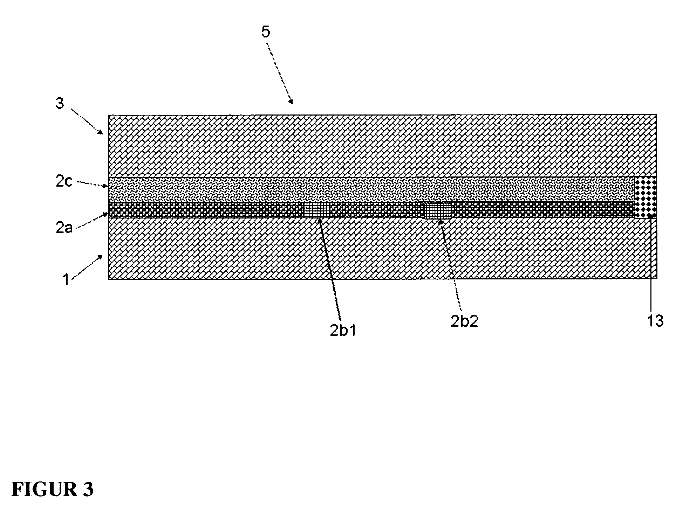

Figur 3 zeigt einen weiteren schematischen Querschnitt der Verbundglasscheibe (5) des beleuchteten Glasheizkörpers (I). Auf der ersten Scheibe (1) sind eine elektrisch beheizbare Beschichtung (2a) und zwei Elektroden (2b1, 2b2) aufgebracht. Die Elektroden (2b1, 2b2) sind über zwei nicht gezeigte Kabel mit einer Stromquelle verbunden. Eine Zwischenfolie (2c) und eine zweite Scheibe (3) sind über der elektrisch beheizbaren Beschichtung angeordnet. Die Randversiegelung (13) schützt die elektrisch beheizbare Beschichtung (2a) vor Umwelteinflüssen wie Korrosion und Feuchtigkeit.

### Bezugszeichenliste:

- (I): erfindungsgemäßer Glasheizkörper,
- (A, B, C): Anschluss,
- (1): erste Scheibe,
- (2): beheizbare Zwischenschicht,
- (2a): elektrisch beheizbare Beschichtung ,
- (2b1): Elektrode,
- (2b2): Elektrode,
- (2c): Zwischenfolie,
- (3): zweite Scheibe,
- (4): Steuereinheit,
- (5): Verbundglasscheibe,
- (6): LED-Leiste,
- (7): elektrischer Kontaktierung,
- (8): Leuchtfelder,
- (9a): Ständer,
- (9b): Halterung,
- (10): LED,
- (11): LED-Leiterplatte,
- (12): Ummantelung,
- (13): Randversiegelung,
- (14): Verbindungsstück und
- (15): Temperaturfühler.

## Patentansprüche

1. Beleuchteter Heizkörper aus Glas umfassend:
a. eine Verbundglasscheibe (5) aus einer ersten Scheibe (1), einer elektrisch beheizbaren Beschichtung (2a) mit zwei Elektroden (2b1, 2b2) auf der Innenseite der ersten Scheibe (1), einer Zwischenfolie (2c) und einer zweiten Scheibe (3),
b. eine über ein Verbindungsstück (14) an der Verbundglasscheibe (5) angebrachte LED-Leiste (6) umfassend mindestens eine LED (10), eine an der LED (10) befestigte LED-Leiterplatte (11), eine an der LED-Leiterplatte (11) befestigte elektrische Kontaktierung (7) und eine Ummantelung (12) der LED (10), LED-Leiterplatte (11) und der elektrischen Kontaktierung (7),
c. Leuchtfelder (8) auf der ersten Scheibe (1) und/oder zweiten Scheibe (3) und
d. einen an der Verbundglasscheibe (5) befestigten Temperaturfühler (15), der die Temperatur der Verbundglasscheibe (5) ermittelt und diese an eine Steuereinheit (4) weitergibt,
wobei die Steuereinheit (4) unterschiedliche Farben der LED-Leiste (6) in Abhängigkeit von der Temperatur des Heizkörpers steuert.

2. Heizkörper nach Anspruch 1, wobei die beheizbare Beschichtung (2a) an der ersten Scheibe (1) und/oder zweiten Scheibe (3) angebracht ist.

3. Heizkörper nach Anspruch 1 oder 2, wobei die beheizbare Beschichtung (2a) einen Schichtwiderstand von 1 Ω pro Quadrat bis 8 Ω pro Quadrat, bevorzugt 1 Ω pro Quadrat bis 4 Ω pro Quadrat aufweist.

4. Heizkörper nach einem der Ansprüche 1 bis 3, wobei die Verbundglasscheibe (5) Ständer (9a) und/oder Halterungen (9b) umfasst.

5. Heizkörper nach einem der Ansprüche 1 bis 4, wobei die Verbundglasscheibe (5) eine Randversiegelung (13), bevorzugt aus PVB, EVA, PC, PU, PET und/oder Gemische oder Copolymere, umfasst.

6. Heizkörper nach einem der Ansprüche 1 bis 5, wobei das Verbindungsstück (14), Acrylatklebstoffe, Methylmethacrylatklebstoffe, Cyanacrylatklebstoffe, Polyepoxide, Silikonklebstoffe und/oder Silanvernetzende-Polymerklebstoffe, bevorzugt, MS-Polymer, RTV (raumtemperaturvernetzenden)-Silikonkautschuk, HTV (hochtemperaturvernetzenden)-Silikonkautschuk, peroxidischvernetzenden-Silikonkautschuk, 2 Komponenten LSR (Liquid Silicone Rubber)-Silikonkautschuk und/oder additionsvernetzenden-Silikonkautschuk sowie Gemische und/oder Copolymere davon enthält.

7. Heizkörper nach einem der Ansprüche 1 bis 6, wobei das Verbindungsstück (14) ein doppelseitiges, optisch transparentes Klebeband enthält.

8. Heizkörper nach einem der Ansprüche 1 bis 7, wobei die LED-Leiste (6) eine Ummantelung aus Metall und/oder Polymer bevorzugt Eisen, Aluminium, Titan, Chrom, Vanadium, Mangan oder Legierungen und/oder Polyolefine, Silikone, Polyisoprene, Styrol-Butadien-Kautschuk, Butadien-Acrylnitril-Kautschuk und/oder Polyacrylate sowie Gemische und/oder Copolymere enthält.

9. Heizkörper nach einem der Ansprüche 1 bis 8, wobei die Verbundglasscheibe (5) eine Randversiegelung, bevorzugt PVB und/oder EVA umfasst.

10. Heizkörper nach einem der Ansprüche 1 bis 9, wobei die Leuchtfelder (8) Partikel, Punktraster, Strichraster, Aufkleber, Anlagerungen, Einkerbungen, Siebdrucke, Einritzungen und/oder Kombinationen davon umfassen.

11. Verfahren zur Herstellung eines beleuchteten Heizkörpers nach einem der Ansprüche 1 bis 10 wobei:
a. eine elektrisch beheizbare Beschichtung (2a) sowie zwei Elektroden (2b1, 2b2) auf einer ersten Scheibe (1) aufgebracht werden,
b. eine Zwischenfolie (2c) auf der elektrisch beheizbaren Beschichtung (2a) angeordnet wird,
c. die erste Scheibe (1), die elektrisch beheizbare Beschichtung (2a), die Elektroden (2b1, 2b2) und eine zweite Scheibe (3) zu einer Verbundglasscheibe (5) laminiert werden,
d. eine LED-Leiste (6) umfassend mindestens eine LED (10), eine an der LED (10) befestigte LED-Leiterplatte (11), eine an der LED-Leiterplatte (11) befestigte elektrische Kontaktierung (7) und eine Ummantelung (12) für LED (10), LED-Leiterplatte (11) und elektrische Kontaktierung (7) an einer Außenkante (5a) der Verbundglasscheibe (5) befestigt wird und
e. Ständer (9a) und/oder Halterungen (9b) an der Unterkante der Verbundglasscheibe (5) befestigt werden.

12. Verfahren nach Anspruch 11, wobei die erste Scheibe (1) und/oder zweite Scheibe (3) mit Leuchtfeldern (8) versehen werden.

13. Verwendung des Heizkörpers nach einem der Ansprüche 1 bis 10 als Heizung in Innenräumen oder künstlichen Kamin.

## Claims

1. Illuminated heater made of glass comprising:
a. a laminated glass pane (5) made of a first pane (1), an electrically heatable coating (2a) with two electrodes (2b1, 2b2) on the interior side of the first pane (1), an intermediate film (2c), and a second pane (3),
b. an LED strip (6) comprising at least an LED (10), an LED circuit board (11) attached to the LED (10), an electrical contact (7) attached to the LED circuit board (11), and a sheath (12) of the LED (10), LED circuit board (11), and the electrical contact (7), affixed to the laminated glass pane (5) by a connecting piece (14),
c. illumination fields (8) on the first pane (1) and/or second pane (3), and
d. a temperature sensor (15) affixed on the laminated glass pane (5), which determines the temperature of the laminated glass pane (5) and forwards it all to a control unit (4)
wherein the control unit (4) controls different colors of the LED strip (6) depending on the temperature of the heater.

2. Heater according to claim 1, wherein the heatable coating (2a) is applied on the first pane (1) and/or second pane (3).

3. Heater according to claim 1 or 2, wherein the heatable coating (2a) has a sheet resistance of 1 Ω per square to 8 Ω per square, preferably 1 Ω per square to 4 Ω per square.

4. Heater according to one of claims 1 through 3, wherein the laminated glass pane (5) includes posts (9a) and/or supports (9b).

5. Heater according to one of claims 1 through 4, wherein the laminated glass pane (5) includes an edge seal (13), preferably made of PVB, EVA, PC, PU, PET, and/or mixtures or copolymers.

6. Heater according to one of claims 1 through 5, wherein the connecting piece (14) contains acrylate adhesives, methyl methacrylate adhesives, cyanoacrylate adhesives, polyepoxies, silicone adhesives, and/or silane-cross-linking polymer adhesives, preferably, MS-polymer, RTV (room temperature vulcanizing) silicone rubber, HTV (high temperature vulcanizing) silicone rubber, peroxide vulcanizing silicone rubber, 2 component LSR (liquid silicone rubber) silicone rubber, and/or addition vulcanizing silicone rubber as well as mixtures and/or copolymers thereof.

7. Heater according to one of claims 1 through 6, wherein the connecting piece (14) includes a double-sided, optically transparent adhesive tape.

8. Heater according to one of claims 1 through 7, wherein the LED strip (6) includes a sheath made of metal and/or polymer, preferably iron, aluminum, titanium, chromium, vanadium, manganese, or alloys and/or polyolefins, silicones, polyisoprenes, styrene-butadiene rubber, butadiene acrylonitrile rubber, and/or polyacrylates as well as mixtures and/or copolymers.

9. Heater according to one of claims 1 through 8, wherein the laminated glass pane (5) includes an edge seal, preferably PVB and/or EVA.

10. Heater according to one of claims 1 through 9, wherein the illumination fields (8) include particles, dot patterns, line patterns, stickers, deposits, indentations, silkscreen prints, incisions, and/or combinations thereof.

11. Method for producing an illuminated heater according to one of claims 1 through 10, wherein:
a. an electrically heatable coating (2a) as well as two electrodes (2b1, 2b2) are applied on a first pane (1),
b. an intermediate film (2c) is disposed on the electrically heatable coating (2a),
c. the first pane (1), the electrically heatable coating (2a), the electrodes (2b1, 2b2), and a second pane (3) are laminated to form a laminated glass pane (5),
d. an LED strip (6) comprising at least an LED (10), an LED circuit board (11) attached to the LED (10), an electrical contact (7) attached to the LED circuit board (11), and a sheath (12) for the LED (10), LED circuit board (11), and the electrical contact (7), is affixed on an outer edge (5a) of the laminated glass pane (5), and
e. posts (9a) and/or supports (9b) are affixed on the bottom edge of the laminated glass pane (5).

12. Method according to claim 11, wherein the first pane (1) and/or second pane (3) are provided with illumination fields (8).

13. Use of the heater according to one of claims 1 through 10 as a heating element in interior spaces or an artificial fireplace.

## Revendications

1. Corps de chauffe éclairé en verre, comprenant :
a. un panneau de verre composite (5) composé d'un premier panneau (1), d'un revêtement (2a) pouvant être chauffé électriquement, muni de deux électrodes (2b1, 2b2) sur la face interne du premier panneau (1), d'une feuille intermédiaire (2c) et d'un deuxième panneau (3) ;
b. une barre de DELs (6) fixée au panneau de verre composite (5) au moyen d'un élément d'assemblage (14) et comprenant au moins une DEL (10), une carte de circuit de DEL (11) fixée à la DEL (10), une métallisation électrique (7) fixée à la carte de circuit de DEL (11) et une enveloppe (12) entourant la DEL (10), la plaque de circuit de DEL (11) et la métallisation électrique (7) ;
c. des champs lumineux (8) sur le premier panneau (1) et/ou sur le deuxième panneau (3) ; et
d. un capteur de température (15) fixé au panneau de verre composite (5), qui détecte la température du panneau de verre composite (5) et la transmet à une unité de commande (4),
dans lequel l'unité de commande (4) établit différentes couleurs de la barre de DELs (6) en fonction de la température du corps de chauffe.

2. Corps de chauffe selon la revendication 1, dans lequel le revêtement (2a) pouvant être chauffé est fixé au premier panneau (1) et/ou au deuxième panneau (3).

3. Corps de chauffe selon l'une des revendications 1 ou 2, dans lequel le revêtement (2a) pouvant être chauffé présente une résistance de couche mince de 1 Ω par carré à 8 Ω par carré, de préférence de 1 Ω par carré à 4 Ω par carré.

4. Corps de chauffe selon l'une des revendications 1 à 3, dans lequel le panneau de verre composite (5) comprend des pieds (9a) et/ou des fixations (9b).

5. Corps de chauffe selon l'une des revendications 1 à 4, dans lequel le panneau de verre composite (5) comprend un scellement de bordure (13), de préférence en PVB, EVA, PC, PU, PET et/ou mélanges ou copolymères.

6. Corps de chauffe selon l'une des revendications 1 à 5, dans lequel l'élément d'assemblage (14) contient des colles à l'acrylate, des colles au méthacrylate de méthyle, des colles au cyanoacrylate, des polyépoxydes, des colles au silicone et/ou des colles faites de polymères réticulant au silane, de préférence un polymère MS, un caoutchouc de silicone RTV (réticulant à température ambiante), un caoutchouc de silicone HTV (réticulant à haute température), un caoutchouc de silicone réticulant au peroxyde, un caoutchouc de silicone LSR (Liquid Silicone Rubber) à 2 composants et/ou un caoutchouc de silicone réticulant par addition, ainsi que leurs mélanges et/ou copolymères.

7. Corps de chauffe selon l'une des revendications 1 à 6, dans lequel l'élément d'assemblage (14) comprend une bande adhésive à double face optiquement transparente.

8. Corps de chauffe selon l'une des revendications 1 à 7, dans lequel la barre de DELs (6) comporte une enveloppe en métal et/ou en polymère, de préférence en fer, aluminium, titane, chrome, vanadium, manganèse ou alliages et/ou en polyoléfines, silicones, polyisoprènes, caoutchouc de styrène butadiène, caoutchouc de butadiène acrylonitrile et/ou polyacrylates ainsi que mélanges et/ou copolymères.

9. Corps de chauffe selon l'une des revendications 1 à 8, dans lequel le panneau de verre composite (5) comprend un scellement de bordure, de préférence en PVB et/ou EVA.

10. Corps de chauffe selon l'une des revendications 1 à 9, dans lequel les champs lumineux (8) comprennent des particules, des trames de points, des trames de traits, des étiquettes auto-adhésives, des incrustations, des rainures, des sérigraphies, des rayures, et/ou leurs combinaisons.

11. Procédé de fabrication d'un corps de chauffe éclairé selon l'une des revendications 1 à 10, dans lequel :
a. un revêtement (2a) pouvant être chauffé électriquement ainsi que deux électrodes (2b1, 2b2) sont fixés sur un premier panneau (1) ;
b. une feuille intermédiaire (2c) est disposée sur le revêtement (2a) pouvant être chauffé électriquement ;
c. le premier panneau (1), le revêtement (2a) pouvant être chauffé électriquement et un deuxième panneau (3) sont stratifiés en un panneau de verre composite (5) ;
d. une barre de DELs (6) comprenant au moins une DEL (10), une carte de circuit de DEL (11) fixée à la DEL (10), une métallisation électrique (7) fixée à la carte de circuit de DEL (11) et une enveloppe (12) pour la ou les DELs (10), la carte de circuit de DEL et une métallisation électrique (7) est fixée à un bord extérieur (5a) du panneau de verre composite (5) ; et
e. des pieds (9a) et/ou des fixations (9b) sont fixés au bord inférieur du panneau de verre composite (5).

12. Procédé selon la revendication 11, dans lequel le premier panneau (1) et/ou le deuxième panneau (3) sont munis de champs lumineux (8).

13. Utilisation du corps de chauffe selon l'une des revendications 1 à 10 comme chauffage pour pièces intérieures ou comme fausse cheminée.
